# EUROPEAN PATENT APPLICATION

(11) **EP 4 428 775 A1**
(43) Date of publication of application: **11.09.2024**
(21) Application number: 23185278.1
(22) Date of filing: 13.07.2023
(51) Int. Cl.: G06Q 10/04, G06Q 50/02

(54) **METHOD AND DEVICE FOR PREDICTING DESERT LOCUST PRESENCE**

(30) Priority: 06.03.2023 CN 202310246264
(71) Applicant: Aerospace Information Research Institute, Chinese Academy of Sciences, Beijing 100094 (CN)
(72) Inventor: DONG, Yingying, China, 100094 (CN); ZOU, Yuzhen, Beijing, 100094 (CN); LI, Xueling, Beijing, 100094 (CN); LIU, Linyi, Beijing, 100094 (CN); HUANG, Wenjiang, Beijing, 100094 (CN); ZHAO, Xing, Beijing, 100094 (CN)
(74) Representative: Gill Jennings & Every LLP

(57) **Abstract**

A method and a device for predicting desert locust presence are provided. The method includes: acquiring environment factor data of a target area, where the environment factor data includes total precipitation data, soil temperature data, soil water data, and vegetation index data; extracting fluctuation features corresponding to the environment factor data through wavelet transform, where the fluctuation features include a precipitation fluctuation feature corresponding to the total precipitation data, a soil temperature fluctuation feature corresponding to the soil temperature data, a soil water fluctuation feature corresponding to the soil water data, and a vegetation fluctuation feature corresponding to the vegetation index data; and predicting time when the desert locust presents in the target area based on the fluctuation features. According to the present disclosure, presence regularity of the desert locust can be comprehensively explored through the wavelet transform, so that the time when the desert locust presents can be accurately and stably predicted.

## Description

### FIELD

The present disclosure relates to the technical field of computers, and in particular to a method and a device for predicting desert locust presence

### BACKGROUND

Currently, early warning and early response is a prevention management strategy generally adopted by many countries for prevention and control of the desert locust. Experienced field investigators and relevant agricultural researchers are organized to perform field surveys to monitor the weather and ecological conditions in potential breeding areas of the desert locust for predicting potential desert locust presence, such as an upsurge in the number of desert locusts in a location. In the method for predicting desert locust presence according to the conventional technology, relevant data is analyzed using an artificial intelligence model to obtain time when the desert locust presents. However, the method has poor universality in predicting time when a desert locust upsurge presents, resulting in low prediction accuracy in some areas. Therefore, a method for predicting desert locust presence with good universality and good stability is urgently required for those skilled in the art.

### SUMMARY

In order to solve the above technical problems, a method and a device for predicting desert locust presence are provided according to the present disclosure, to predict time when the desert locust presents.

In order to achieve the above objectives, the following technical solutions are provided according to embodiments of the present disclosure.

A computer-implemented method for predicting desert locust presence is provided according to an embodiment of the present disclosure. The method includes:
acquiring environment factor data of a target area, where the environment factor data includes total precipitation data, soil temperature data, soil water data, and vegetation index data;
extracting fluctuation features corresponding to the environment factor data through wavelet transform, where the fluctuation features include a precipitation fluctuation feature corresponding to the total precipitation data, a soil temperature fluctuation feature corresponding to the soil temperature data, a soil water fluctuation feature corresponding to the soil water data, and a vegetation fluctuation feature corresponding to the vegetation index data; and
predicting time when a desert locust presents in the target area based on the fluctuation features.

In an embodiment, the fluctuation features include a first fluctuation feature corresponding to the environment factor data of the target area for a past period of time, and a second fluctuation feature corresponding to the environment factor data of the target area for a future period of time, where the method further includes:
determining a lag period of the fluctuation features based on data of the desert locust presence in the target area for the past period of time and the first fluctuation feature,
where the predicting time when the desert locust presents in the target area based on the fluctuation features includes:
   predicting the time when the desert locust presents in the target area based on the second fluctuation feature and the lag period.

In an embodiment, the predicting the time when the desert locust presents in the target area based on the second fluctuation feature and the lag period includes:
adjusting the second fluctuation feature based on the lag period; and
predicting the time when the desert locust presents in the target area based on the adjusted second fluctuation feature.

In an embodiment, the method further includes:
classifying the environment factor data as a first type of data and a second type of data based on a correspondence between the environment factor data of the target area and data of the desert locust presence in the target area for a past period of time; and
performing differential processing on the second type of data,
where the extracting fluctuation features corresponding to the environment factor data through wavelet transform includes:
   extracting a fluctuation feature corresponding to the first type of data and a fluctuation feature corresponding to the processed second type of data through the wavelet transform.

In an embodiment, the method further includes:
acquiring migration prediction information of the target area,
where the predicting time when the desert locust presents in the target area based on the fluctuation features includes:
   predicting the time when the desert locust presents in the target area based on the fluctuation features and the migration prediction information.

In an embodiment, the predicting the time when the desert locust presents in the target area based on the fluctuation features and the migration prediction information includes:
performing binarization processing on the migration prediction information to obtain locust source information; and
predicting the time when the desert locust presents in the target area based on the fluctuation features and the locust source information.

Corresponding to the method for predicting the desert locust presence described above, a device for predicting desert locust presence is further provided according to the present disclosure. The device includes: an acquiring module, an extracting module and a predicting module. The acquiring module is configured to acquire environment factor data of a target area, where the environment factor data includes total precipitation data, soil temperature data, soil water data, and vegetation index data. The extracting module is configured to extract fluctuation features corresponding to the environment factor data through wavelet transform, where the fluctuation features include a precipitation fluctuation feature corresponding to the total precipitation data, a soil temperature fluctuation feature corresponding to the soil temperature data, a soil water fluctuation feature corresponding to the soil water data, and a vegetation fluctuation feature corresponding to the vegetation index data. The predicting module is configured to predict time when the desert locust presents in the target area based on the fluctuation features.

In an embodiment, the fluctuation features include a first fluctuation feature corresponding to the environment factor data of the target area for a past period of time, and a second fluctuation feature corresponding to the environment factor data of the target area for a future period of time. The device further includes: a determining module, configured to determine a lag period of the fluctuation features based on data of the desert locust presence in the target area for the past period of time and the first fluctuation feature. The predicting module is configured to predict the time when the desert locust presents in the target area based on the second fluctuation feature and the lag period.

In an embodiment, the device further includes: a classifying module and a differential processing module. The classifying module is configured to classify the environment factor data as a first type of data and a second type of data based on a correspondence between the environment factor data of the target area and data of the desert locust presence in the target area for a past period of time. The differential processing module is configured to perform differential processing on the second type of data. The extracting module is configured to extract a fluctuation feature corresponding to the first type of data and a fluctuation feature corresponding to the processed second type of data through the wavelet transform.

In an embodiment, the device further includes: a migration prediction information acquiring module, configured to acquire migration prediction information of the target area. The predicting module is configured to predict the time when the desert locust presents in the target area based on the fluctuation features and the migration prediction information.

In an embodiment, the predicting module is configured to adjust the second fluctuation feature based on the lag period; and predict the time when the desert locust presents in the target area based on the adjusted second fluctuation feature.

In an embodiment, the predicting module is configured to perform binarization processing on the migration prediction information to obtain locust source information; and predict the time when the desert locust presents in the target area based on the fluctuation features and the locust source information.

According to the above technical solutions, the present disclosure has the following beneficial effects.

A computer-implemented method for predicting desert locust presence is provided according to the embodiments of the present disclosure. The method includes: acquiring environment factor data of a target area, where the environment factor data includes total precipitation data, soil temperature data, soil water data, and vegetation index data; extracting fluctuation features corresponding to the environment factor data through wavelet transform, where the fluctuation features include a precipitation fluctuation feature corresponding to the total precipitation data, a soil temperature fluctuation feature corresponding to the soil temperature data, a soil water fluctuation feature corresponding to the soil water data, and a vegetation fluctuation feature corresponding to the vegetation index data; and predicting time when the desert locust presents in the target area based on the fluctuation features. The steps of acquiring, extracting and predicting will each be performed by appropriately programmed processing modules or other computing devices.

It can be seen that in the method for predicting the desert locust according to the embodiments of the present disclosure, the fluctuation features corresponding to the environment factor data are extracted through the wavelet transform, and then the time when the desert locust presents in the target area is predicted based on the fluctuation features. It should be noted that during the extraction of the fluctuation features from the environment factor data through the wavelet transform, a correspondence between relative positions of variables in a time series and the variables can be extracted from the environment factor data due to the characteristics of the wavelet transform, that is, change trend data can be extracted from the environment factor data. The change trend data in the environment factor data has a mapping relationship with the time when the desert locust presents. Therefore, according to the present disclosure, the presence regularity of the desert locust can be comprehensively explored through the wavelet transform, so that the time when the desert locust presents can be accurately and stably predicted. Practically, a region where the desert locust moves is about 16 million square kilometers, it is difficult and time-consuming to investigate whether the desert locust presents on site. With the technical solution of the present disclosure, it can be accurately determined whether the desert locust presents in the entire moving region of the desert locust, thereby reducing the investigation range, improving the investigation efficiency and thus being beneficial for related technicians to take corresponding measures in a timely manner.

### BRIEF DESCRIPTION OF THE DRAWINGS

In order to illustrate technical solutions in embodiments of the present disclosure or the conventional technology more clearly, hereinafter drawings to be used in the description of the embodiments or the conventional technology are described simply. Apparently, the drawings described below are only used for illustrating the embodiments of present disclosure. For those skilled in the art, other drawings may be obtained based on the drawings without any creative work.
Figure 1 is a flow chart of a method for predicting desert locust presence according to an embodiment of the present disclosure;
Figure 2 is a schematic diagram of a correspondence between environment factor data and data of desert locust presence according to an embodiment of the present disclosure;
Figure 3 is a schematic diagram of a correspondence between fluctuation features and data of desert locust presence according to an embodiment of the present disclosure;
Figure 4 is a schematic diagram of precision detection results according to an embodiment of the present disclosure;
Figure 5 is a schematic diagram of a method for predicting desert locust presence according to an embodiment of the present disclosure; and
Figure 6 is a structural diagram of a device for predicting desert locust presence according to an embodiment of the present disclosure.

### DETAILED DESCRIPTION OF EMBODIMENTS

In order to better understand solutions according to the embodiments of the present disclosure, application scenarios of the solutions according to the embodiments of the present disclosure are introduced before the method according to the embodiments of the present disclosure is described.

The growth and development of a desert locust are influenced by precipitation, soil water, soil temperature, vegetation growth conditions and other factors. According to the conventional technology, a correspondence between total precipitation data and a recession area of the desert locust acquired from seven satellite sensors is evaluated, and it is found that the total precipitation data is relatively evenly distributed. According to the conventional technology, a correspondence between the detected soil water and the presence of desert locust is evaluated using a European Space Agency CCI soil moisture product (ESA CCI SM), and it is found that in a case that the soil water is greater than 0.11m³/m³, a time period during which desert locust larvae are observed is increased by 35-79 days. Hunter-Jones found that in a case that a temperature is between 15.1°C and 35°C, a development speed of locust eggs is directly proportional to the temperature; and in a case that a temperature is higher than 35°C, the development speed is independent of the temperature. According to the conventional technology, it is proposed to monitor a near real-time vegetation aging state using a normalized difference vegetation index (NDVI) and a normalized difference tillage index (NDTI). The proposing is verified in some areas, and it is found that classification precision is influenced by vegetation density, climate differences and other factors.

Only considering a single environment factor for research on the desert locust presence is not comprehensive enough. The desert locust presence is studied by considering multiple environment factors, and the study has achieved some results. According to the conventional technology, a soil temperature, a leaf area index, and soil water detected by the satellites are introduced into the study on the desert locust, a species distribution model is established using different machine learning algorithms, so that a suitable environment of the desert locust is extracted. According to the conventional technology, a driving mode of a desert locust upsurge in 2020 is analyzed based on remote sensing images and long-term meteorological observation data of a desert locust invasion area, and it is found that total precipitation, air temperature, and soil water in 2018-2020 are greater than usual total precipitation, air temperature, and soil water, respectively, which provides favorable environmental conditions for large-scale continuous multigenerational reproduction, resulting in the desert locust upsurge. According to the conventional technology, four factors of water, radiation, precipitation, and temperature are used to indicate a climate change, an impact of the climate change on the potential distribution of the desert locust is explored, and a current distribution of solitary desert locust is characterized and potential recession areas in 2050 and 2090 are predicted using the species distribution model. According to the conventional technology, desert locust hopper bands are predicted in some areas based on multi-source static factors and dynamic factors by using support vector machines and random forest approach, and an overall precision of the prediction is 77.46%.

Currently, early warning and early response is a prevention management strategy generally adopted by many countries for prevention and control of the desert locust. Experienced field investigators and relevant agricultural researchers are organized to perform field surveys to monitor the weather and ecological conditions in potential breeding areas of the desert locust for predicting the potential desert locust. In the method for predicting the desert locust according to the conventional technology, relevant data is analyzed using an artificial intelligence model to obtain time when the desert locust presents. However, the method has poor stability in predicting the time when a desert locust upsurge presents. Therefore, a method for predicting desert locust presence with high accuracy and good stability is urgently required for those skilled in the art.

In order to solve the above technical problems, a method for predicting desert locust presence is provided according to an embodiment of the present disclosure. The method includes: acquiring environment factor data of a target area, where the environment factor data includes total precipitation data, soil temperature data, soil water data, and vegetation index data; extracting fluctuation features corresponding to the environment factor data through wavelet transform, where the fluctuation features include a precipitation fluctuation feature corresponding to the total precipitation data, a soil temperature fluctuation feature corresponding to the soil temperature data, a soil water fluctuation feature corresponding to the soil water data, and a vegetation fluctuation feature corresponding to the vegetation index data; and predicting time when the desert locust presents in the target area based on the fluctuation features.

It can be seen that in the method for predicting the desert locust according to the embodiment of the present disclosure, the fluctuation features corresponding to the environment factor data are extracted through the wavelet transform, and then the time when the desert locust presents in the target area is predicted based on the fluctuation features. It should be noted that during the extraction of the fluctuation features from the environment factor data through the wavelet transform, a correspondence between relative positions of variables in a time series and the variables can be extracted from the environment factor data due to the characteristics of the wavelet transform, that is, change trend data can be extracted from the environment factor data. The change trend data in the environment factor data has a mapping relationship with the time when the desert locust presents. Therefore, according to the present disclosure, the presence regularity of the desert locust can be comprehensively explored through the wavelet transform, so that the time when the desert locust presents can be accurately and stably predicted.

In order to make the above objective, features and advantages of the present disclosure more apparent and understandable, hereinafter, the embodiments of the present disclosure are described in further detail in combination with the drawings and specific implementations.

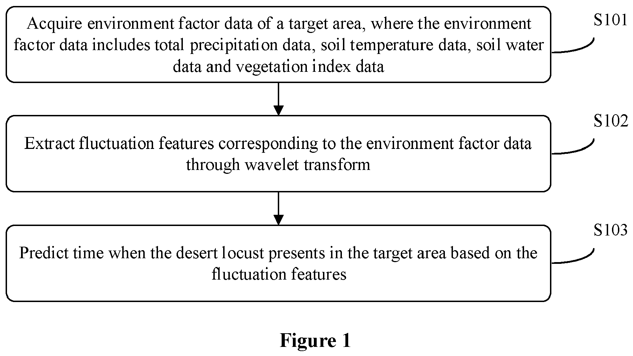

Reference is made to Figure 1, which is a flow chart of a method for predicting desert locust presence according to an embodiment of the present disclosure.

As shown in Figure 1, the method for predicting the desert locust according to the embodiment of the present disclosure includes the following steps S101 to S103.

In step S101, environment factor data of a target area is acquired. The environment factor data includes total precipitation data, soil temperature data, soil water data, and vegetation index data.

It should be noted that the total precipitation (TP) data, soil temperature (ST) data, and soil water (SW) data in the embodiment of the present disclosure may be acquired from meteorological data of the target area. The vegetation index data may be the normalized difference vegetation index (NDVI). NDVI is acquired from moderate-resolution imaging spectroradiometer (MODIS). The MODIS provides NDVI data with a time resolution of 16 days and a size of 1km×1km around the world. A desert locust archive and ground survey data may be acquired from the Food and Agriculture Organization-Desert Locust Information Service (FAO-DLIS).

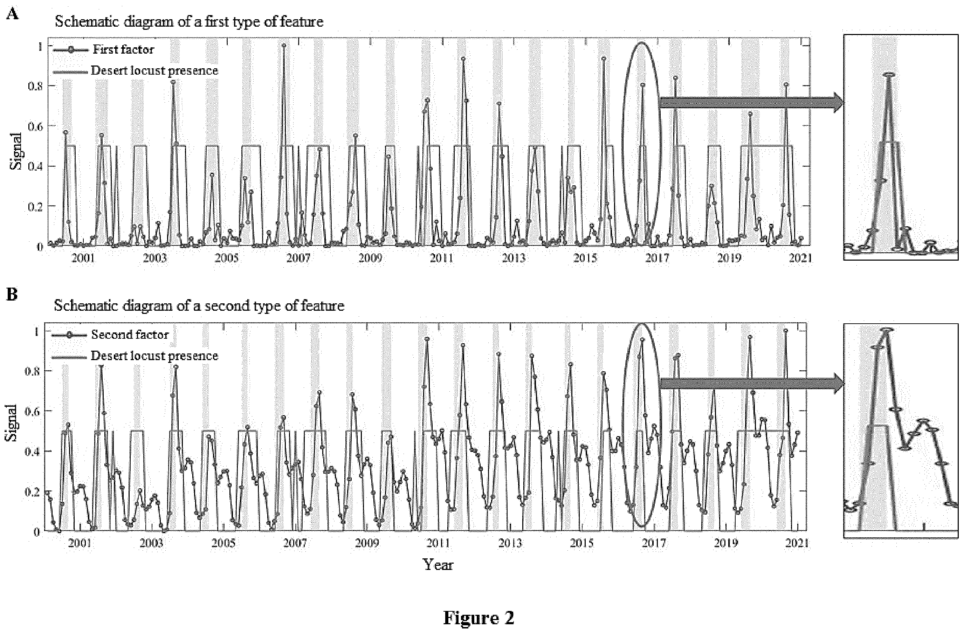

In the embodiment of the present disclosure, the environment factor data is classified as a first type of data and a second type of data based on a correspondence between the environment factor data of the target area and data of the desert locust presence in the target area for a past period of time. Differential processing is performed on the second type of data, and the first type of data is not processed. A fluctuation feature corresponding to the first type of data and a fluctuation feature corresponding to the processed second type of data are extracted through the wavelet transform. As shown in Figure 2, the inventor of the present disclosure found that a value of a part of environment factor data has a correspondence with data of the desert locust presence, while a growth rate of other environment factor data has a correspondence with data of the desert locust presence. As shown in Figure 2, a diagram A of a first type of feature illustrates that the value (a first factor) of the first type of data has a correspondence with data of the desert locust presence, and a diagram B of a second type of feature illustrates that a growth rate (a second factor) of the second type of data has a correspondence with data of the desert locust presence.

Therefore, according to the embodiment of the present disclosure, the environment factor data is classified as the first type of data and the second type of data. The value of the first type of data has the correspondence with the data of the desert locust presence, and the growth rate of the second type of data has the correspondence with the data of the desert locust presence. Then differential processing is performed on the second type of data, so that a value of the processed second type of data also has a correspondence with the data of the desert locust presence. The fluctuation feature corresponding to the first type of data and the fluctuation feature corresponding to the processed second type of data are extracted through the wavelet transform.

In step S 102, fluctuation features corresponding to the environment factor data are extracted through wavelet transform.

According to the present disclosure, the fluctuation features of the environment factors indicating the desert locust presence are extracted through the wavelet transform. The wavelet transform may reveal a local feature of a signal from both time domain and frequency domain. Specifically, according to the present disclosure, the fluctuation features of the environment factors may be extracted using Morlet wavelet. The Morlet wavelet is normally used for time series analysis. A real part of a function in the Morlet wavelet is expressed by a second derivative of a smooth function. A scale parameter has a one-to-one correspondence with a cycle T of Fourier analysis, and signal features of a specified scale and cycle are extracted according to the correspondence. A wavelet coefficient acquired through the wavelet transform may evaluate similarity between a signal and a selected wavelet shape, and may also reveal a phase state of the signal at different scales. Based on results of long-term series analysis, in a case that the extracted feature is at a relative level of the environment factors, wavelet transform is directly performed on pre-processed environment factor data. In a case that the extracted feature is a change feature of the environment factors, differential processing is performed on the environment factors, and then wavelet transform is performed on the environment factors subjected to the differential processing. In a case that the desert locust presence corresponds to the feature of the environment factors in an annual cycle, a wavelet function with a scale parameter of 1 is selected for feature extraction. In a case that the desert locust presence does not correspond to the feature of the environment factors in the annual cycle, a wavelet function with an appropriate scale is selected for a feature waveform through numerical experiments.

In a case that the fluctuation features are classified based on sources, the fluctuation features include the precipitation fluctuation feature corresponding to the total precipitation data, the soil temperature fluctuation feature corresponding to the soil temperature data, the soil water fluctuation feature corresponding to the soil water data, and the vegetation fluctuation feature corresponding to the vegetation index data. The precipitation fluctuation feature is extracted from the total precipitation data, the soil temperature fluctuation feature is extracted from the soil temperature data, the soil water fluctuation feature is extracted from the soil water data, and the vegetation fluctuation feature is extracted from the vegetation index data.

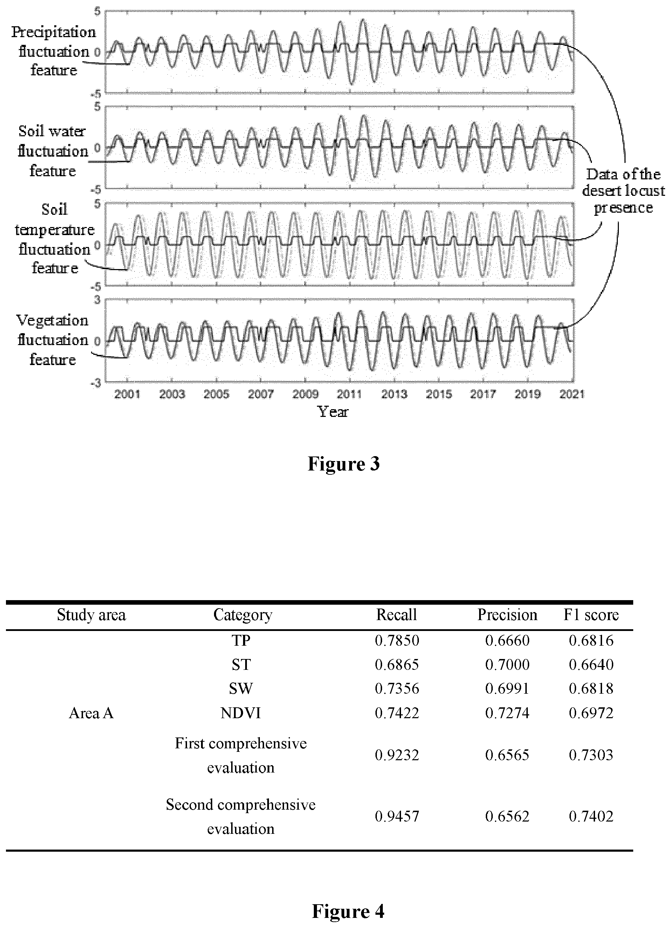

In a case that the fluctuation features are classified based on time, the fluctuation features include a first fluctuation feature corresponding to the environment factor data of the target area for a past period of time, and a second fluctuation feature corresponding to the environment factor data of the target area for a future period of time. As shown in Figure 3, the abscissa in Figure 3 represents time (year), fluctuation curves in Figure 3 represent a first fluctuation feature, and other curves in Figure 3 represent data of the desert locust presence. In a case that a value on the curves representing the data of the desert locust presence is a maximum value, i.e. 1, during a time period, it is indicated that the desert locust presents in the target area during the time period. In Figure 3, a fluctuation curve in a first diagram represents the precipitation fluctuation feature in the first fluctuation feature, a fluctuation curve in a second diagram represents the soil water fluctuation feature in the first fluctuation feature, a fluctuation curve in a third diagram represents the soil temperature fluctuation feature in the first fluctuation feature, and a fluctuation curve in a fourth diagram represents the vegetation fluctuation feature in the first fluctuation feature.

The first fluctuation feature may be used to correct timing of the fluctuation features. Specifically, according to the present disclosure, a lag period of the fluctuation features may be determined based on the data of the desert locust presence in the target area for the past period of time and the first fluctuation feature. Then, the second fluctuation feature is adjusted based on the lag period. It should be noted that the inventor found that there is a time lag between the fluctuation features acquired from the wavelet transform and the data of the desert locust presence. Specifically, environment factor data in one month not only affects a presence probability of the desert locust in the month, or a presence probability of the desert locust in one of subsequent months, but also affects a presence probability of the desert locust in the coming months.

According to the present disclosure, the data of the desert locust presence in the target area for the past period of time may match with the first fluctuation feature to obtain the lag period between the fluctuation features and the desert locust. As shown in Figure 3, a fluctuation curve represented by dashed lines shows the first fluctuation feature with the lag period. Abscissas corresponding to ordinates greater than 0 in the fluctuation curve showing the first fluctuation feature with the lag period are highly overlapped with abscissas corresponding to the ordinates greater than 0 in the curves representing the data of the desert locust presence. Therefore, according to the present disclosure, time when the desert locust presents in the future may be predicted through the second fluctuation feature. For example, the lag period may be one month to six months.

In step S103, time when the desert locust presents in the target area is predicted based on the fluctuation features.

It should be noted that in the embodiment of the present disclosure, the time when the desert locust presents in the target area is predicted based on the second fluctuation feature and the lag period. According to the present disclosure, the second fluctuation feature is postponed by one lag period based on the lag period, that is, a curve showing the second fluctuation feature moves to the right by one lag period on a horizontal axis. It should be noted that in the embodiment of the present disclosure, the fluctuation features from different sources in the first fluctuation feature may correspond to different lag periods. For example, the soil water fluctuation feature may correspond to a lag period of one month, and the soil temperature fluctuation feature may correspond to a lag period of three months. The lag period is not limited in the embodiment of the present disclosure.

As shown in Figure 3, abscissas corresponding to ordinates greater than 0 in the fluctuation curve showing the first fluctuation feature with the lag period are highly overlapped with abscissas corresponding to the ordinates greater than 0 in the curves representing the data of the desert locust presence. Therefore, in the present disclosure, an abscissa corresponding to an ordinate greater than 0 in a fluctuation curve showing the second fluctuation feature with the lag period may be determined as the time when the desert locust presents.

According to the embodiment of the present disclosure, in order to further improve the precision in predicting the time when the desert locust presents, migration prediction information of the target area may be acquired based on the desert locust archive (also known as a monthly announcement), and then the time when the desert locust presents in the target area is predicted based on the fluctuation features and the migration prediction information. The migration prediction information of the desert locust in the desert locust archive is acquired by comprehensively analyzing based on known presence conditions and environment conditions of the desert locust. Specifically, binarization processing may be performed on the migration prediction information to obtain locust source information; and the time when the desert locust presents in the target area is predicted based on the fluctuation features and the locust source information. It should be noted that in the present disclosure, the locust source information is incorporated into the study on the regularity of the desert locust presence based on the environment factor data, so that response regularity of the desert locust presence can be more comprehensively explored. A triggering mechanism for the desert locust presence is studied based on both the environment factor data and the locust source information, and the response regularity of the desert locust presence in various core breeding areas of the desert locust can be revealed, thereby improving the accuracy of the prediction, and thus being beneficial to the prevention and control for the desert locust in different areas.

Reference is made to Figure 4, which is a schematic diagram of precision detection results according to an embodiment of the present disclosure.

As shown in Figure 4, factors affecting precision for predicting the time when the desert locust presents in an area A include total precipitation (TP), soil temperature (ST), soil water (SW), normalized difference vegetation index (NDVI), first comprehensive evaluation (including the soil water (SW), the soil temperature (ST), the total precision (TP), and the normalized difference vegetation index (NDVI)), second comprehensive evaluation (including the soil water (SW), the soil temperature (ST), the total precipitation (TP), the normalized difference vegetation index (NDVI) and the locust source information IMMIGRATION). The response regularity of the desert locust presence in various areas is quantitatively evaluated by using three evaluation indexes including recall, precision, and F1 score. F1 score represents a comprehensive evaluation result of the recall and the precision.

Since the survey data of the desert locust on the ground records presence-only data of the desert locust, and the cost of false negatives is greater than the cost of false positives, it is focused on evaluating the desert locust presence, which complies with the concept of the prevention management strategy. In addition, the desert locust presence is a continuous process, and desert locust presence normally lasts for several months. Based on this regularity, according to the present disclosure, the recall, the precision, and the F1 score may be calculated in an annual cycle, and then a mean of precision within a year is calculated as a final precision evaluation result. The precision evaluation result in the area A is shown in Figure 4.

In the method for predicting the desert locust according to the embodiment of the present disclosure, features are extracted from the environment factor data through the wavelet transform, so that the regularity of the desert locust presence can be comprehensively explored, and the time when the desert locust presents can be accurately and stably predicted. According to the present disclosure, the locust source information is incorporated into the study on the regularity of the desert locust presence based on the environment data, so that the response regularity of the desert locust presence can be more comprehensively explored. A triggering mechanism for the desert locust presence is studied based on both the environment factor data and the locust source information, and the response regularity of the desert locust presence in various core breeding areas of the desert locust is revealed, thereby improving the accuracy of the prediction, and thus being beneficial to the prevention and control for the desert locust in different areas.

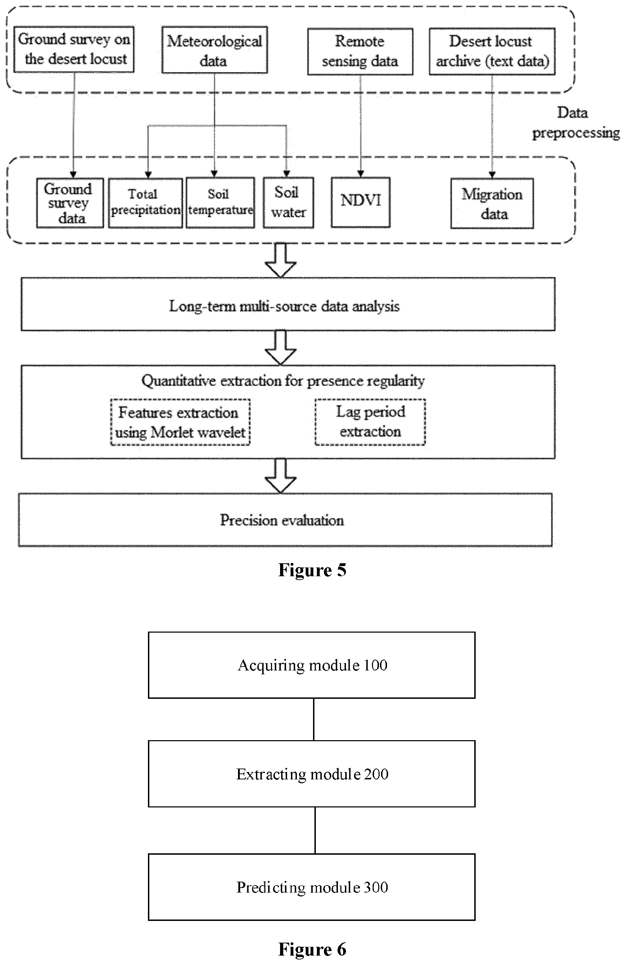

Reference is made to Figure 5, which is a schematic diagram of a method for predicting desert locust presence according to an embodiment of the present disclosure.

As shown in Figure 5, according to the embodiment of the present disclosure, the ground survey data (that is, the data of the desert locust presence) may be acquired through ground survey on the desert locust, the total precipitation data, the soil temperature data, and the soil water data may be acquired from the meteorological data in the target area, the NDVI may be acquired from the remote sensing data of the target area, and migration data of the desert locust may be acquired from the desert locust archive. Then, according to the present disclosure, long-term multi-source data analysis may be performed on the above data. The total precipitation data, the soil temperature data, the soil water data and the NDVI are classified as the first type of data and the second type of data, and differential processing is performed on the second type of data. The quantitative extraction may be performed on the first type of data and the processed second type of data to explore the response regularity. Specifically, the fluctuation features may be extracted using Morlet wavelet, the extracted fluctuation features may be corrected through the lag period, and the time when the desert locust presents may be predicted by using the corrected fluctuation features. Finally, according to the present disclosure, the precision of the method for predicting the desert locust according to the present disclosure is evaluated based on the predicted time when the desert locust presents and actual time when the desert locust presents.

Corresponding to the above method for predicting the desert locust presence, a device for predicting desert locust presence is further provided according to the present disclosure.

Reference is made to Figure 6, which is a structural diagram of a device for predicting desert locust presence according to an embodiment of the present disclosure.

As shown in Figure 6, the device for predicting the desert locust includes an acquiring module 100, an extracting module 200 and a predicting module 300.

The acquiring module 100 is configured to acquire environment factor data of a target area. The environment factor data includes total precipitation data, soil temperature data, soil water data, and vegetation index data.

The extracting module 200 is configured to extract fluctuation features corresponding to the environment factor data through wavelet transform. The fluctuation features include a precipitation fluctuation feature corresponding to the total precipitation data, a soil temperature fluctuation feature corresponding to the soil temperature data, a soil water fluctuation feature corresponding to the soil water data, and a vegetation fluctuation feature corresponding to the vegetation index data.

The predicting module 300 is configured to predict time when the desert locust presents in the target area based on the fluctuation features.

In an embodiment, the fluctuation features include a first fluctuation feature corresponding to the environment factor data of the target area for a past period of time, and a second fluctuation feature corresponding to the environment factor data of the target area for a future period of time. The device according to the embodiment of the present disclosure further includes a determining module. The determining module is configured to determine a lag period of the fluctuation features based on data of the desert locust presence in the target area for the past period of time and the first fluctuation feature. Accordingly, the predicting module is configured to predict the time when the desert locust presents in the target area based on the second fluctuation feature and the lag period.

In an embodiment, the device further includes a classifying module and a differential processing module. The classifying module is configured to classify the environment factor data as a first type of data and a second type of data based on a correspondence between the environment factor data of the target area and data of the desert locust presence in the target area for the past period of time. The differential processing module is configured to perform differential processing on the second type of data. Accordingly, the extracting module 200 is configured to extract a fluctuation feature corresponding to the first type of data and a fluctuation feature corresponding to the processed second type of data through the wavelet transform.

In an embodiment, the device further includes a migration prediction information acquiring module. The migration prediction information acquiring module is configured to acquire migration prediction information of the target area. Accordingly, the predicting module is configured to predict the time when the desert locust presents in the target area based on the fluctuation features and the migration prediction information.

In an embodiment, the predicting module is configured to adjust the second fluctuation feature based on the lag period; and predict the time when the desert locust presents in the target area based on the adjusted second fluctuation feature.

In an embodiment, the predicting module is configured to perform binarization processing on the migration prediction information to obtain locust source information; and predict the time when the desert locust presents in the target area based on the fluctuation features and the locust source information.

With the device for predicting the desert locust according to the embodiment of the present disclosure, features are extracted from the environment factor data through the wavelet transform, so that the regularity of the desert locust presence can be comprehensively explored, and the time when the desert locust presents can be accurately and stably predicted. According to the present disclosure, the locust source information is incorporated into the study on the regularity of the desert locust presence based on the environment data, so that the response regularity of the desert locust presence can be more comprehensively explored. A triggering mechanism for the desert locust presence is studied based on both the environment factor data and the locust source information, and the response regularity of the desert locust presence in various core breeding areas of the desert locust is revealed, thereby improving the accuracy of the prediction, and thus being beneficial to the prevention and control for the desert locust in different areas.

Through the descriptions of the above embodiments, those skilled in the art may clearly understand that all or a part of steps in the method according to the above embodiments may be implemented by means of software and a necessary general hardware platform. Based on such understanding, an essential part or a part contributing to the conventional technology of the technical solutions of the present disclosure may be embodied in a form of a software product. The computer software product may be stored in a storage medium, such as an ROM/RAM, a magnetic disk, or a compact disc, and include several instructions executed by a computer device (which may be a personal computer, a server, a network communication device such as a media gateway, or the like) to perform the method described in each embodiment or some parts of the embodiments of the present disclosure.

It should be noted that the embodiments in this specification are described in a progressive manner, each of which emphasizes the differences from others, and the same or similar parts among the embodiments can be referred to each other. Since the device disclosed in the embodiments corresponds to the method disclosed in the embodiments, the description of the device disclosed in the embodiments is relatively simple, and references may be made to the description of the method for relevant matters.

It should be further noted that terms of "include", "comprise" or any other variants in the present disclosure are intended to be non-exclusive. Therefore, a process, method, article or device including a series of elements includes not only the elements but also other elements that are not enumerated, or also include the elements inherent for the process, method, article or device. Unless expressively limited otherwise, the statement "comprising (including) one..." does not exclude the case that other similar elements may exist in the process, method, article or device.

Based on the above description of the disclosed embodiments, those skilled in the art can implement or carry out the present disclosure. It is apparent for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the widest scope consistent with the principle and novel features disclosed herein.

## Claims

1. A computer-implemented method for predicting desert locust presence, comprising:
acquiring environment factor data of a target area, wherein the environment factor data comprises total precipitation data, soil temperature data, soil water data, and vegetation index data;
extracting fluctuation features corresponding to the environment factor data through wavelet transform, wherein the fluctuation features comprise a precipitation fluctuation feature corresponding to the total precipitation data, a soil temperature fluctuation feature corresponding to the soil temperature data, a soil water fluctuation feature corresponding to the soil water data, and a vegetation fluctuation feature corresponding to the vegetation index data; and
predicting time when a desert locust presents in the target area based on the fluctuation features.

2. The method according to claim 1, wherein the fluctuation features comprise a first fluctuation feature corresponding to the environment factor data of the target area for a past period of time, and a second fluctuation feature corresponding to the environment factor data of the target area for a future period of time,
wherein the method further comprises:
determining a lag period of the fluctuation features based on data of the desert locust presence in the target area for the past period of time and the first fluctuation feature;
and wherein the predicting time when the desert locust presents in the target area based on the fluctuation features comprises:
predicting the time when the desert locust presents in the target area based on the second fluctuation feature and the lag period.

3. The method according to claim 2, wherein the predicting the time when the desert locust presents in the target area based on the second fluctuation feature and the lag period comprises:
adjusting the second fluctuation feature based on the lag period; and
predicting the time when the desert locust presents in the target area based on the adjusted second fluctuation feature.

4. The method according to claim 1, further comprising:
classifying the environment factor data as a first type of data and a second type of data based on a correspondence between the environment factor data of the target area and data of the desert locust presence in the target area for a past period of time; and
performing differential processing on the second type of data,
wherein the extracting fluctuation features corresponding to the environment factor data through wavelet transform comprises:
extracting a fluctuation feature corresponding to the first type of data and a fluctuation feature corresponding to the processed second type of data through the wavelet transform.

5. The method according to claim 1, further comprising:
acquiring migration prediction information of the target area,
wherein the predicting time when the desert locust presents in the target area based on the fluctuation features comprises:
predicting the time when the desert locust presents in the target area based on the fluctuation features and the migration prediction information.

6. The method according to claim 5, wherein the predicting the time when the desert locust presents in the target area based on the fluctuation features and the migration prediction information comprises:
performing binarization processing on the migration prediction information to obtain locust source information; and
predicting the time when the desert locust presents in the target area based on the fluctuation features and the locust source information.

7. A device for predicting desert locust presence, comprising:
an acquiring module, configured to acquire environment factor data of a target area, wherein the environment factor data comprises total precipitation data, soil temperature data, soil water data, and vegetation index data;
an extracting module, configured to extract fluctuation features corresponding to the environment factor data through wavelet transform, wherein the fluctuation features comprise a precipitation fluctuation feature corresponding to the total precipitation data, a soil temperature fluctuation feature corresponding to the soil temperature data, a soil water fluctuation feature corresponding to the soil water data, and a vegetation fluctuation feature corresponding to the vegetation index data; and
a predicting module, configured to predict time when a desert locust presents in the target area based on the fluctuation features.

8. The device according to claim 7, wherein the fluctuation features comprise a first fluctuation feature corresponding to the environment factor data of the target area for a past period of time, and a second fluctuation feature corresponding to the environment factor data of the target area for a future period of time,
wherein the device further comprises:
a determining module, configured to determine a lag period of the fluctuation features based on data of the desert locust presence in the target area for the past period of time and the first fluctuation feature,
and wherein the predicting module is configured to predict the time when the desert locust presents in the target area based on the second fluctuation feature and the lag period.

9. The device according to claim 7, further comprising:
a classifying module, configured to classify the environment factor data as a first type of data and a second type of data based on a correspondence between the environment factor data of the target area and data of the desert locust presence in the target area for a past period of time; and
a differential processing module, configured to perform differential processing on the second type of data,
wherein the extracting module is configured to extract a fluctuation feature corresponding to the first type of data and a fluctuation feature corresponding to the processed second type of data through the wavelet transform.

10. The device according to claim 7, further comprising:
a migration prediction information acquiring module, configured to acquire migration prediction information of the target area,
wherein the predicting module is configured to predict the time when the desert locust presents in the target area based on the fluctuation features and the migration prediction information.
